# EUROPÄISCHE PATENTANMELDUNG

(11) **EP 3 751 710 A1**
(43) Veröffentlichungstag der Anmeldung: **16.12.2020**
(21) Anmeldenummer: 20176839.7
(22) Anmeldetag: 27.05.2020
(51) Int. Cl.: H02K 5/22, H05K 7/02

(54) **ELEKTRISCHE VORRICHTUNG**

(30) Priorität: 12.06.2019 DE 102019208518
(71) Anmelder: Robert Bosch GmbH, 70442 Stuttgart (DE)
(72) Erfinder: Wolff, Friedemann, 71139 Ehningen (DE); Krauss, Bruno, 70825 Muenchingen (DE)

(57) **Zusammenfassung**

Die Erfindung beschreibt eine elektrische Vorrichtung (10) mit einem Halteelement (13) und einem durch das Halteelement (13) gehaltenen Element (16) ausgeführt als elektrischer Leiter, wobei das gehaltene Element (16) an mindestens einer Stelle mittels eines Festlagers (19) durch das Halteelement (13) gehalten ist, wobei das Halteelement (13) und das Element (16) unterschiedliche thermische Längenausdehnungskoeffizienten (alpha_13, alpha_16) aufweisen, wobei das Halteelement (13) das Element (16) an mindestens einer Stelle mittels eines Gleitlagers (22) hält.

## Beschreibung

### Stand der Technik

Aus der Offenlegungsschrift DE 10 2009 042 567 A1 einer deutschen Patenanmeldung ist eine sogenannte Anschlussplatte bekannt. Diese Anschlussplatte dient dazu sogenannte Minusdioden und Plusdioden miteinander elektrisch zu verbinden und somit eine an sich bekannte Brückenschaltung darzustellen. In dieser Anschlussplatte sind verschiedene elektrische Leiter eingebettet. Einer dieser Leiter ist als Element an mehreren Stellen jeweils mittels eines Festlagers durch das Halteelement, ausgebildet durch den umspritzten Kunststoff, gehalten. Das Halteelement als Kunststoffteil und das leitende Element aus einem Metall weisen unterschiedliche thermische Längenausdehnungskoeffizienten auf.

Unterschiedliche thermische Längenausdehnungskoeffizienten von miteinander verhältnismäßig fest verbundenen Elementen führen zwangsläufig zu Verspannungen in den jeweils einzelnen Bauteilen. Bei einem Element, welches aus einem polymeren Kunststoff - beispielsweise Polyamid - besteht, entstehen im Verbund mit einem elektrischen Leiter als gehaltenem Element beispielsweise Zugspannungen. In dem elektrisch leitfähigen gehaltenen Element entstehen beispielsweise Druckspannungen. Das kann beim Abkühlen oder während des Betriebs zu mechanischen Spannungen und in der Folge zu Rissen im Kunststoff führen. Je größer die Abmessungen eines Metalleinlegeteils, desto größer die Dehnungen und somit die Gefahr der Rissbildung.

Des Weiteren hat unterschiedliches Schrumpfverhalten von Metall und Kunststoff bei der Abkühlung der Kunststoffschmelze zur Folge, dass sich das Bauteil verzieht, was zu maßlichen Abweichungen führt. Je größer die Dimensionen des Metalleinlegers, desto größer ist der Verzug des Kunststoffbauteils und desto schlechter die Maßhaltigkeit. Kunststoff-Bauteile mit enthaltenen großen Metallelementen, die hohen maßlichen Anforderungen genügen müssen oder keine Risse aufweisen dürfen (z.B. aufgrund von Dichtheits-Anforderungen), werden nach dem Stand der Technik mittels Befestigungselementen wie z. B. Schrauben, Nieten, Kabelbinder oder Klebstoff am Kunststoff-Bauteil befestigt. Die Befestigung erfolgt nach dem Spritzgussprozess, nach dem das Kunststoff-Bauteil nach dem Öffnen des Werkzeugs von typischerweise etwa 140°C -180°C (Entformungstemperatur) auf Raumtemperatur abgekühlt ist. Bei Erreichen der Raumtemperatur ist die Kunststoff-Schwindung abgeschlossen und es kommt bei der Montage des Metallelements zu keinen Verspannungen.

Ausgehend vom Stand der Technik liegt der Erfindung die Aufgabe zugrunde, große Metalleinleger mit Kunststoff zu umspritzen und dabei trotz unterschiedlicher Ausdehnungskoeffizienten von Kunststoff und Metalleinleger eine hohe Maßhaltigkeit des Kunststoffbauteils zu gewährleisten und Risse in der Folge von mechanischen Spannungen zu vermeiden. Befestigungselemente und ein Montageprozess zur Befestigung des Metallelements sollen entfallen.

### Offenbarung der Erfindung

Der Erfindung liegt das Prinzip zugrunde, Längenänderungen des Kunststoffs (Halteelements) zuzulassen, ohne diese durch den umspritzten Metalleinleger (gehaltenes Element) zu behindern. Bei der Abkühlung des Kunststoffs wird dem Einlegeteil die Möglichkeit gegeben am Kunststoff abzugleiten, sodass keine Kraft zwischen Einlegeteil und Kunststoff entsteht. Da keine Kraft aufgebaut wird, entstehen auch keine Spannungen und folglich keine Risse. Durch die freie Beweglichkeit des Einlegeteils gibt es keine Verspannung zwischen dem Metalleinleger (gehaltenes Element) und dem Kunststoff, daher keine Deformation und die Maßhaltigkeit im Kunststoff ist gleich gut wie beim Kunststoff-Bauteil ohne Metalleinleger.

Es wird durch spezielle Lagerung des Metalleinlegers mit Fest- und Loslager die Spannungsbildung vermieden und die Stromschiene mit Abmessungen von mehr als 100 mm x 100 mm und einer Materialstärke von ca. 1,0 mm im Kunststoff-Gehäuserahmen umspritzt. Nieten, Klebstoff und ein Montageprozess zur Befestigung der Stromschiene entfallen.

Gemäß einem Gesichtspunkt der Erfindung ist eine elektrische Vorrichtung mit einem Halteelement und einem durch das Halteelement gehaltenen Element vorgesehen, wobei das gehaltene Element an mindestens einer Stelle mittels eines Festlagers durch das Halteelement gehalten ist, wobei das Halteelement und das Element unterschiedliche thermische Längenausdehnungskoeffizienten aufweisen. Dabei hält das Halteelement das Element an mindestens einer Stelle mittels eines Gleitlagers. Das Element ist ein elektrisch fähiger Leiter. Gemäß einem weiteren Gesichtspunkt der Erfindung ist vorgesehen, dass das Halteelement ein Gehäuseteil und hierbei insbesondere ein Gehäuseteil aus einem Gussmaterial ist. Dieses Gussmaterial ist dabei vorzugsweise ein sogenannter polymerer Kunststoff, der vorzugsweise verstärkt - insbesondere durch Faserstoffe - ist. Nach einer weiteren Ausgestaltung der Erfindung ist vorgesehen, dass das Gleitlager das gehaltene Element, den Leiter, insbesondere einstückig, umgreift. Es ist insbesondere vorgesehen, dass bei der elektrischen Vorrichtung eine Fläche des gehaltenen Elements, insbesondere eine Schnittfläche des gehaltenen Elements, an mindestens einer Kante einer Wange des Gleitlagers benachbart ist. Bei einer weiteren Ausgestaltung kann es dadurch auch so sein, dass diese eine Fläche des Halteelements, die nach wie vor insbesondere eine Schnittfläche ist, an beispielsweise zwei Kanten jeweils einer Wange des Gleitlagers benachbart ist. Nach einer weiteren Ausgestaltung der Erfindung steht die Fläche des gehaltenen Elements, insbesondere die Schnittfläche, einer Fläche des Halteelements mit einem Abstand gegenüber. Dabei weist dieser Abstand insbesondere einen sogenannten Leerraum auf, d. h. zwischen der Fläche des gehaltenen Elements, insbesondere der Schnittfläche, und der Fläche des Halteelements ist ein Leerraum, in dem typischerweise beispielsweise Luft ist. Ein Vorteil dieser Anordnung besteht darin, dass durch diese Anordnung unter bestimmten Umständen zwischen den beteiligten Gegenständen (Haltelement, gehaltene Elementleiter) eine Relativbewegung ermöglicht wurde. Ist die Fläche des gehaltenen Elements, insbesondere die Schnittfläche, der Fläche des Halteelements mit einem Abstand versetzt gegenüberstehend, so kann es möglich gewesen sein, dass ein Schwinden des einen Materials, nämlich des Halteelements in beispielsweise zwei Achsen möglich war und so Verspannungen zwischen Halteelement und gehaltenem Element besonders gering ausfallen. Eine besonders stabile Anordnung ergibt sich daraus, dass das gehaltene Element Leiter an dem Gleitlager eine Fläche aufweist, deren Oberfläche in einer Richtung zu einem Festlager ausgerichtet ist. Dadurch kann erreicht werden, dass ein Abstand zwischen der Fläche des Halteelements und der Fläche des gehaltenen Elements besonders klein, wenn nicht gar null ist. Dies führt zu geringeren Belastungen in den haltenden Elementen bzw. Strukturen des Halteelements. Nach einem weiteren Gesichtspunkt der Erfindung ist vorgesehen, dass mehrere Gleitlager zueinander gleichseitig ausgerichtet sind. Dies bedeutet beispielsweise, dass das gehaltene Element mehrfach von einer gleichen Seite umgriffen ist. Dies kann beispielsweise bedeuten, dass eine Fläche bzw. Schnittfläche des gehaltenen Elements Leiter in eine gleiche Richtung ausgerichtet ist. Eine derartige Anordnung führt erwartungsgemäß dazu, dass Verspannungen sehr gering ausfallen bzw. null sind.

Bevorzugte Ausführungsformen der Erfindung werden nachfolgend anhand der beigefügten Zeichnungen näher erläutert.

Es zeigen:
- Figur 1: eine prinzipielle Darstellung einer elektrischen Vorrichtung mit einem Halteelement und einem durch das Halteelement gehaltenen Element Leiter,
- Figur 2: eine Schnittansicht der elektrischen Vorrichtung aus Figur 1,
- Figur 3: eine Seitenansicht des Elements aus Figur 1 und Figur 2,
- Figur 4: eine weitere Schnittansicht des Elements aus den Figuren 1, 2, und 3 nach einem Abkühlvorgang,
- Figur 5: eine Seitenansicht auf ein zweites Ausführungsbeispiel,
- Figur 6: eine Schnittdarstellung entsprechend der Schnittlinie in Figur 5,
- Figur 7: eine Einzelheit eines Festlagers auf dem Ausführungsbeispiel nach den Figuren 5 und 6 in einer Draufsicht,
- Figur 8: eine Schnittdarstellung entsprechend der Schnittlinie aus Figur 7,
- Figur 9: die Darstellung aus Figur 7 mit einer anderen Schnittlinie,
- Figur 10: eine Schnittdarstellung entsprechend der Schnittlinie in Figur 9,
- Figur 11: ein Ausführungsbeispiel eines Gleitlagers unmittelbar nach der Entnahme des noch heißen Bauteils aus dem Werkzeug (Spritzguss),
- Figur 12: eine Darstellung eines Schnittes entsprechend der Schnittlinie aus Figur 11,
- Figur 13: eine Darstellung des Gleitlagers aus Figur 11 nach dem Abkühlen,
- Figur 14: eine Schnittdarstellung des Gleitlagers aus Figur 13 entsprechend der dort eingezeichneten Schnittlinie.

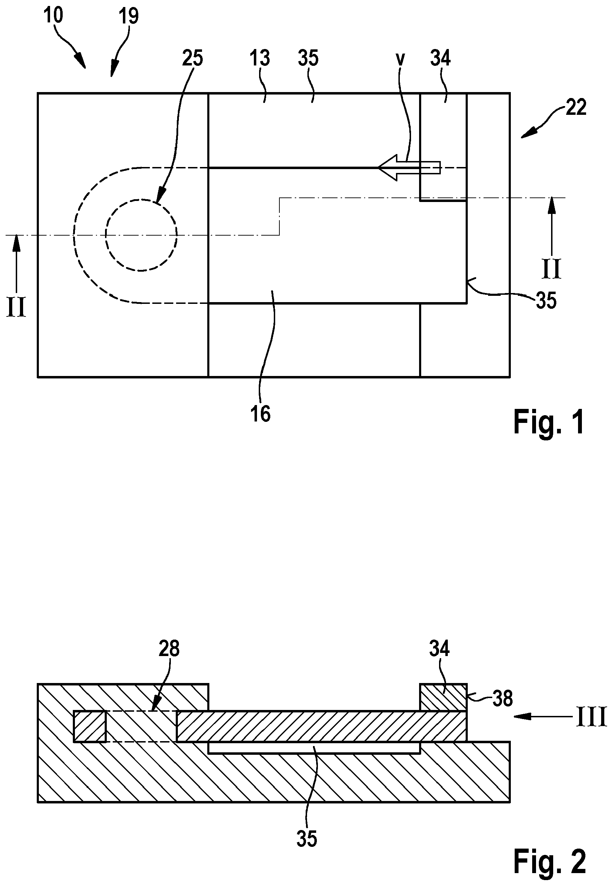

In Figur 1 ist eine Draufsicht einer elektrischen Vorrichtung 10 dargestellt. Diese elektrische Vorrichtung hat ein Halteelement 13 und ein durch das Haltelement 13 gehaltenes Element 16, welches hier ein elektrischer Leiter (metallisches Element) ist. Dieses gehaltene Element 16, welches hier als Leiter ausgeführt ist, ist Teil eines Stromkreises, welcher hier nicht vollständig dargestellt ist. So kann dieses Element 16 beispielsweise an einer Stelle mittels eines vermittelnden Leiters mit dem Pluspol einer Batterie verbunden sein und an einer anderen Stelle mittels einer weiteren hier nicht dargestellten Leiters mit einem Minuspol einer Batterie verbunden sein. Diese vermittelnden Leiter zwischen Element 16 und Batterie wiederum können unterbrochen sein, so dass dort beispielsweise ein Verbraucher zwischengeschaltet ist. Dieser Verbraucher kann beispielsweise eine Spule einer elektrischen Maschine sein. Des Weiteren kann einer dieser beiden vermittelnden Leiter zwischen Batterie und Element 16 durch einen schaltbaren Hauptstrompfad eines elektronischen Schalters (Transistor, insbesondere MOSFET) unterbrochen bzw. durch diesen verbunden sein.

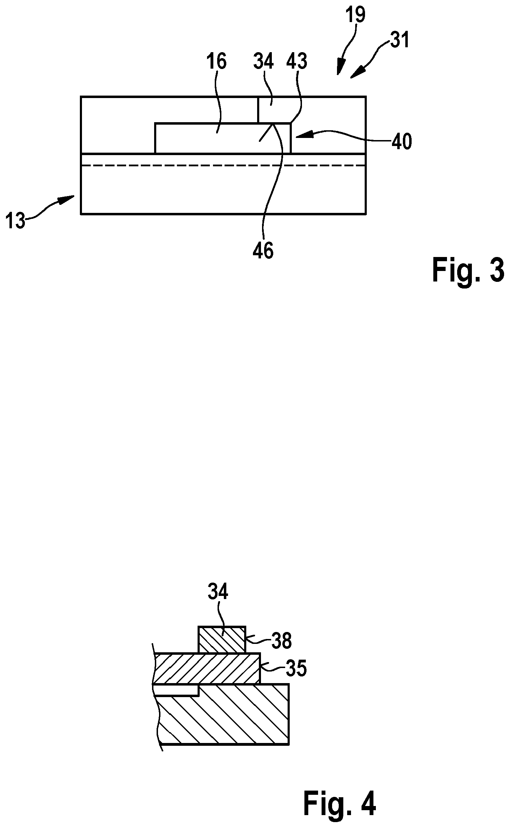

Das Element 16 ist dabei durch das Halteelement 13 wie folgt gehalten. In der Figur 1 links befindet sich ein Festlager 19 und in der Figur 1 rechts befindet sich ein Gleitlager 22 (sogenannte Fest-Los-Lagerung). Wie in Verbindung mit Figur 2 gut erkannt werden kann, ist das Festlager 19 dabei beispielhaft so ausgebildet, dass dieses einen Hinterschnitt umfasst, welcher ein Verlagern des Elements 16 am Haltelement 13 nicht ermöglicht. Dieser Hinterschnitt ist hier dadurch gebildet, indem das Element 16 ein Loch 25 aufweist, welches durch Material des Halteelements 13 - beispielsweise durch einen Fertigungsschritt wie Spritzgießen - gefüllt ist. Dieser hier im Beispiel insbesondere zylindrisch ausgeführte Teil des Halteelements 13 nach Art eines Zapfens ist hier als Festlagerelement 28 bezeichnet. Das Gleitlager 22 ist hier dadurch verwirklicht, in dem - man vergleiche auch mit Figur 3 - von einem Sockel 31 ein Wangenelement 34 ausgeht und dabei das Element 16 überkragt. Das Element 16 überbrückt eine Aussparung 35.

Das Halteelement 13 hat einen Längenausdehnungskoeffizienten alpha_13, das Element 16 hat einen Längenausdehnungskoeffizienten apha_16. Für die beiden Längenausdehnungskoeffizienten gilt, dass der Längenausdehnungskoeffizient alpha_13 größer als der Längenausdehnungskoeffizient apha_16 ist. Der Längenausdehnungskoeffizient alpha_13 ist beispielsweise der Längenausdehnungskoeffizient von Polyamid, insbesondere von Glasfaser verstärktem Polyamid, und beträgt beispielsweise 65x10E-6/K. Der Längenausdehnungskoeffizient alpha_16 ist beispielsweise der Längenausdehnungskoeffizient von Kupfer, insbesondere von Elektrokupfer, und beträgt beispielsweise 18x10E-6/K. Findet nun ausgehend von der Situation, wie sie in den Figuren 1, 2 und 3 dargestellt ist, eine Temperaturverringerung statt, so schwindet das Halteelement 13 bei gleicher Temperaturveränderung wie der des Elements 16 stärker. Dies führt für die Lagerung des Elements 16 am Halteelement 13 dazu, dass das Festlager 19 das Element 16 ohne Änderung der Relativlage zwischen Element 16 und Halteelement 13 weiterhin festhält. An der Stelle des Gleitlagers 22 dagegen kann die unterschiedliche Längenänderung des Halteelements 13 und des Elements 16 zu einer Veränderung führen. Während das Wangenelement 34 gemäß den Darstellungen nach den Figuren 1 und 2 bei der Ausgangstemperatur und Ausgangssituation bündig mit einer Fläche 35 des Elements 16 abschließt, wird nach der Temperaturverringerung eine Fläche 35 des Elements 16 vor der Fläche 38 (Endfläche) des Wangenelements 34 stehen. Oder anders ausgedrückt, das Element 16 wird nach der negativen Temperaturänderung (Abkühlen) gegenüber dem benachbarten Wangenelement 34 vorstehen, man vergleiche mit Figur 4.

Aus dem Vorbeschriebenen wird somit eine elektrische Vorrichtung 10 mit einem Halteelement 13 und einem durch das Halteelement 13 gehaltenen Element 16, ausgeführt als elektrischer Leiter, deutlich, wobei das gehaltene Element 16 an mindestens einer Stelle mittels eines Festlagers 19 durch das Halteelement 13 gehalten ist. Das Halteelement 13 und das Element 16 weisen unterschiedliche thermische Längenausdehnungskoeffizienten alpha_13, alpha_16 auf. Dabei hält das Halteelement 13 das Element 16 an mindestens einer Stelle mittels eines Gleitlagers 22. Wie insbesondere aus der Beschreibung zur Figur 4 deutlich wird, ermöglicht diese Art der Lagerung eine Relativverschiebung am Gleitlager 22, insbesondere hervorgerufen durch Temperaturveränderungen. Die elektrische Vorrichtung 10 nach den Figuren 1 bis 4 zeigt ein Halteelement 13, welches als ein Gehäuseteil ausgeführt ist. Dabei ist dieses Gehäuseteil insbesondere aus einem Gussmaterial gefertigt. Dieses Gussmaterial ist dabei insbesondere ein Isolator, vorzugsweise polymerer Kunststoff, der vorzugsweise verstärkt ist. Die Figuren 1, 2, 3 und 4 zeigen, dass das Gleitlager 22 das gehaltene Element 16 - insbesondere einstückig - umgreift, dies wird insbesondere in der Figur 3 sehr deutlich. Wie aus Figur 3 deutlich wird, ist eine Fläche 40 des gehaltenen Elements 16 an mindestens einer Kante 43 einer Wange 46 des Gleitlagers 22 benachbart. Die erwähnte Fläche 40 ist dabei beispielsweise eine Schnittfläche. Dies trifft beispielsweise dann zu, wenn das Element 16 als blechernes Element aus einem Blechband oder einer Blechplatte gestanzt ist. Dann ergibt sich die Fläche 40 durch das Herausstanzen des Elements 16 aus dem Rohmaterial. Die Kante 43 ergibt sich dabei durch das Trennen an dieser Fläche 40 bzw. Schnittfläche. Die Wange 46 ist hier die Fläche des Wangenelements 34, welche als Fläche dem Element 16 im bzw. am Gleitlager 22 zugewandt ist. Die Wange 46 verhindert dadurch beispielsweise ein Abheben des Elements 16 von seiner Unterlage, d. h. von seinem Halteelement 13. Andererseits ermöglicht diese Konstruktion das bereits erwähnte Verschieben, Figur 4. Das gehaltene Element 16 weist durch die Fläche 40 an dem Gleitlager 22 eine Fläche auf, deren Oberfläche in eine Richtung zu dem Festlager 19 ausgerichtet ist. Dies bedeutet hier an diesem Fall, dass ein Vektor in der Ebene der Fläche 40 einbeschreibbar ist, der zu dem erwähnten Festlager 19 gerichtet ist. Man vergleiche hierbei mit dem an dieser Stelle eingezeichneten Pfeil in der Figur 1, der dort mit dem Bezugszeichen v bezeichnet ist.

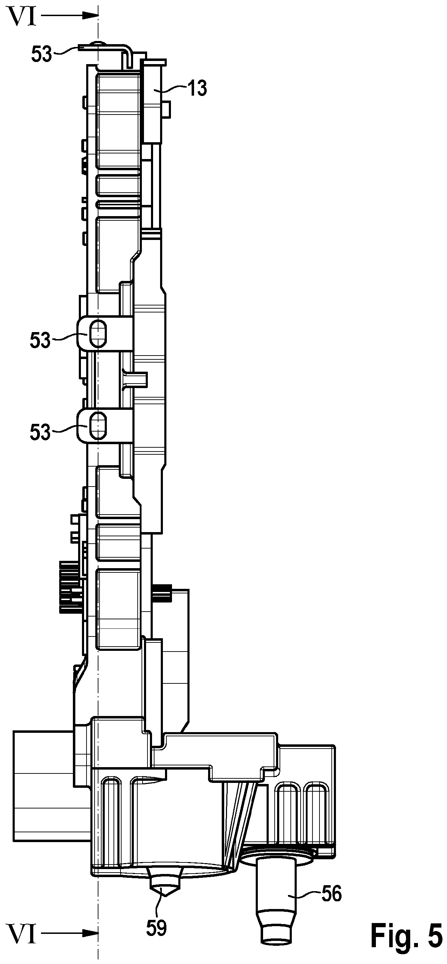

In den Figuren 5 bis 14 ist ein weiteres Ausführungsbeispiel der Erfindung in verschiedenen Ansichten und Einzelheiten dargestellt.

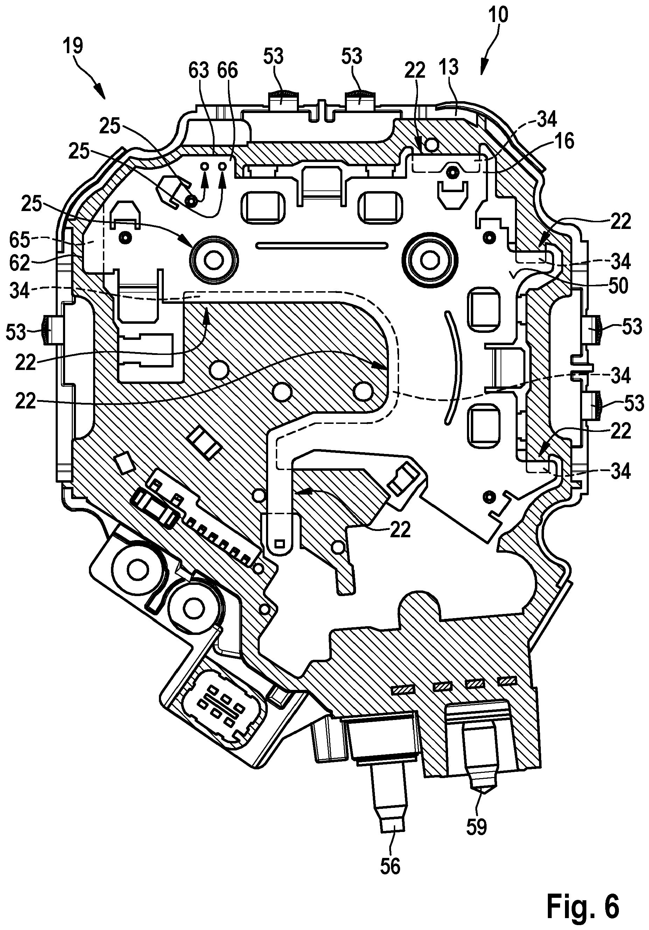

In Figur 5 ist eine Seitenansicht des zweiten Ausführungsbeispiels dargestellt. In Figur 5 ist eine Schnittlinie VI - VI eingetragen, dem entsprechend ist in Figur 6 ein entsprechender Schnitt dargestellt. Die in Figur 5 dargestellte Schnittebene VI - VI entspricht der Ebene, die mit einer Oberfläche 50 des Elements 16 zusammenfällt. Auch in diesem Ausführungsbeispiel ist ein Halteelement 13 gezeigt, welches auch hier aus einem Spritzgussteil aus polymerem Kunststoff besteht. Innerhalb dieses Halteelements 13 sind verschiedene metallische Einlegeteile 53 dargestellt. Diese Einlegeteile 53 dienen beispielsweise zum Kontaktieren mit einer Ständerwicklung einer elektrischen Maschine, die hier nicht dargestellt ist. Weitere Einlegeteile sind beispielsweise ein hier als sogenannter B-Plus-Bolzen bezeichnetes Element, das hier die Bezugszahl 56 trägt. Des Weiteren gibt es gleichfalls einen B-Minus-Bolzen, der hier mit der Bezugszahl 59 bezeichnet ist.

Das in Figur 6 dargestellte Festlager 19 ist hier ein verhältnismäßig aufwändig gestaltetes Festlager 19. Es weist verschiedene, mehrere Elemente eines Festlagers auf, die zum Teil jeweils für sich bereits Festlager sind. Insofern ist dieses Festlager 19 beispielsweise durch einfassende Ecken 62, 63 ausgeführt (dick liniert dargestellt). Diese einfassenden Ecken umgreifen jeweils für sich je eine Ecke 65, 66 des Elements 16. An einer jeden Ecke 65, 66 liegt das Element 16 nach dem Umspritztsein mit dem Halteelement 13 (Gehäuserahmen) auf einem hier nicht dargestellten Kunststoff-Abschnitt des Halteelements 13 auf. Zusätzlich werden diese Ecken 65, 66 durch die einfassenden Ecken 62, 63 in Richtung einer zweiten Achse definiert gehalten. Diese zweite Achse entspricht in etwa einer Verbindungslinie zwischen den beiden einfassenden Ecken 63, 62. Des Weiteren ist die Oberfläche 50 des Elements 16 im Bereich dieser Ecken 65, 66 prinzipiell nach Art des bereits erwähnten Wangenelements 34 übergriffen. Dementsprechend wirken bereits diese einfassenden Ecken 62, 63 sowie die angrenzenden Wangenelemente 34 des rahmenförmigen Elements 16 für sich als Elemente eines Festlagers 19 bzw. als Festlager 19. Weitere Elemente eines Festlagers 19 sind zwei Löcher 25, die wie das Loch 25 aus dem ersten Ausführungsbeispiel wirken. Diese beiden Löcher 25 sind wie beim ersten Ausführungsbeispiel durchspritzt, so dass in diesen Löchern 25 jeweils ein Festlagerelement 28 wie ein Bolzen bzw. eine Achse in den Löchern 25 steckt. Auch diese Elemente wirken insbesondere zusammen mit einer angrenzenden Wand der Ecke 63 für sich wie ein Festlager 19. Rund um diese Löcher 25 ist das Element 16 ebenfalls von unten als auch von oben durch Flächenelemente des angespritzten Halteelements 13 gestützt. Auch hier ergibt sich kein Freiheitsgrad für diese Elemente eines Festlagers 19. Ein weiteres Element des Festlagers 19, welches auch für sich als Festlager 19 wirken könnte, (wenn die anderen Festlagerelemente nicht schon vorhanden wären), ist das mit der Bezugszahl 25 bezeichnete größte Loch 25. Hier ist rund um ein weiteres Einlegeteil Material des Halteelements 13 eingespritzt, so dass dieses Material des Halteelements 13 das Loch 25 ringartig von innen ausfüllt. Im Gegensatz zu dem Festlagerelement 28 nach dem ersten Ausführungsbeispiel ist dieses Festlagerelement als Hohlzylinder bzw. Ring gestaltet. Dieses Festlager 19 gemäß den Figuren 5 und Figur 6 weist viele Merkmale eines Festlagers 19 auf. Es ist insbesondere vorgesehen, dass mindestens eine Gruppe von Festlagerelementen verwirklicht sein soll. Obwohl die Darstellung der elektrischen Vorrichtung 10 nach Figur 5 und Figur 6 somit eine verhältnismäßig große Menge an Festlagerelementen aufweist, ist keine so große Menge von Festlagerelementen zwingend erforderlich. Beispielhaft sei hier erwähnt, dass es hier bereits ausreichen kann, wenn nur ein Festlagerelement verwirklicht ist. Hierzu kann beispielsweise das bereits erwähnte große Loch 25 dienen, welches es in der Figur 6 unterhalb der beiden kleinen Löcher 25 eingeordnet ist. Andererseits können zum Beispiel diese beiden kleinen Löcher 25, welche oberhalb des großen Loches 25 angeordnet sind, bereits jeweils für sich als Festlagerelement dienen. Und selbst wenn weder die beiden kleinen Löcher 25 noch das große Loch 25 als Festlagerelement vorhanden wären, so könnten immer noch die beiden einfassenden Ecken 62, 63 zusammen mit den beiden eingefassten Ecken 65, 66 zusammengenommen ein Festlager 19 sein. Im Festlager 19 kann es bei Differenztemperaturen zu keiner Bewegung zwischen Element 16 (Stromschiene) und Halteelement 13 (Kunststoff) kommen, da das Element 16 von allen Seiten eingespannt (umspritzt) ist. Das Festlager besitzt folglich keinen Freiheitsgrad.

Das Ausführungsbeispiel nach Figur 6 zeigt neben den Festlagerelementen bzw. den Festlagern 19 des Weiteren auch Gleitlager 22. Diese Gleitlager 22 sind jeweils für sich praktisch so aufgebaut, wie das Gleitlager 22, welches beim ersten Ausführungsbeispiel dargestellt ist. Bei einem jeden dieser Gleitlager 22 ist das Element 16 von dessen Unterseite her durch ein Wangenelement 34 gestützt. Die entsprechenden gestrichelten Linien, die bei den einzelnen Gleitlagern 22 eingezeichnet sind, deuten die verdeckte Außenkante der entsprechenden Wangenelemente 34 an. Außer an den Festlagern und den Loslagern gibt es zwischen Element 16 und dem gespritzten Halteelement 13 keine weiteren Anlagestellen, das Element 16 ist an den restlichen Bereichen freigelegt.

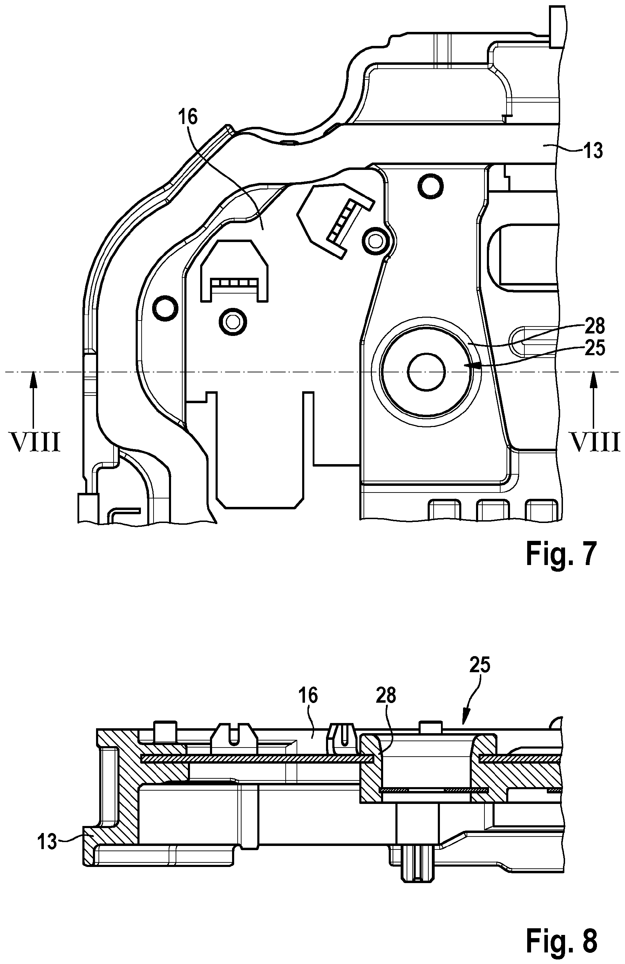

In den Figuren 7 und 8 ist das eine Festlagerelement, welches durch das große Loch 25 unterhalb der kleinen Löcher 25 repräsentiert ist (Fig. 6), dargestellt. Hier ist besonders gut die hohle bzw. hohlzylindrische bzw. ringzylindrische Ausgestaltung des Festlagerelements 28 zu erkennen.

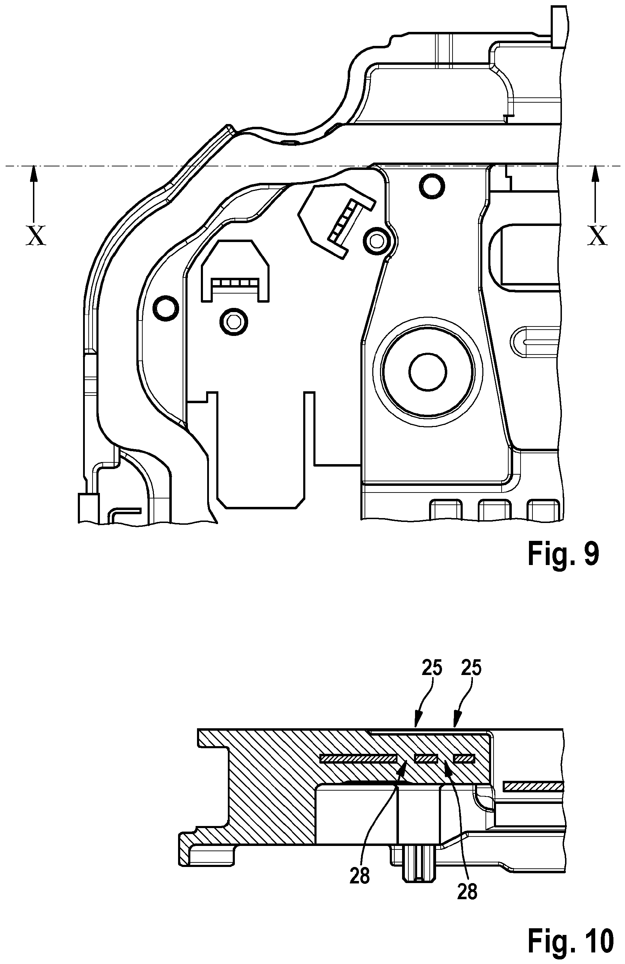

In den Figuren 9 und 10 sind die Festlagerelemente 28 zu erkennen, die jeweils die beiden Löcher 25 (kleine Löcher) durchdringen und so jeweils für sich ein Festlager 19 bilden.

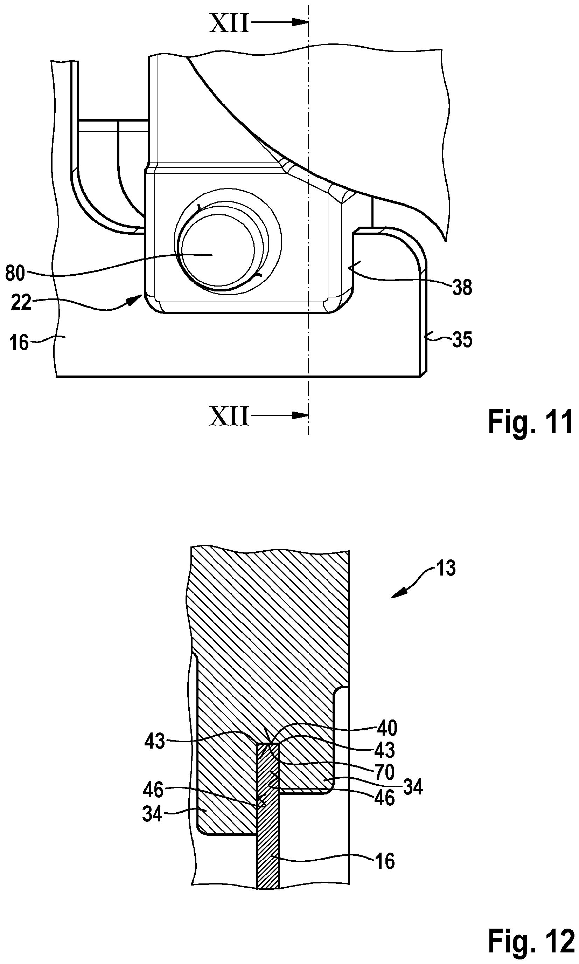

In Figur 11 ist beispielhaft ein Gleitlager aus dem Ausführungsbeispiel nach Figur 6 dargestellt. Es handelt sich hierbei um das Gleitlager, welches in Figur 6 rechts unten zu erkennen ist. Wie gut zu erkennen ist, ist hier ein Bereich des Elements 16 beidseitig von einem Wangenelement 34 umgriffen (Figur 11, Figur 12). Die Darstellungen nach Figur 11 und Figur 12 stellen die Verbindungen aus dem Element 16 mit dem Haltelement 13 in dem Moment dar, in dem das Halteelement 13 als Kunststoffformteil/Spritzgussteil nach dem Umspritzen noch nicht abgekühlt ist und daher seine Form gegenüber dem Element 16 noch nicht merklich geändert hat.

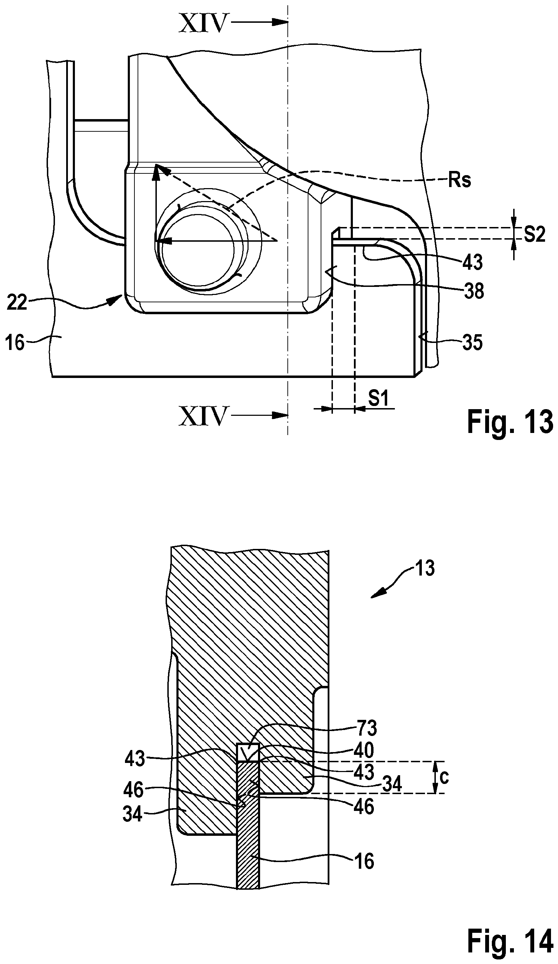

In den Darstellungen nach den Figuren 13 und 14 ist zu erkennen, wie sich das Haltelement 13 und hier ganz besonders dessen Wangenelemente 34 durch das Abkühlen des Halteelements 13 verändert haben. Aufgrund der Lage zu dem Festlager 19 zieht sich das hier dargestellte Gleitlager 22 in Pfeilrichtung Rs (Schrumpfrichtung) zurück. Dies bedeutet, dass sich die beiden Flächen 35 und 38 zueinander in ihrer Relativlage verändern. Dabei ist gut zu erkennen, dass sich die Lageänderungen der Flächen 35 bzw. 38 zueinander um die Strecke s1 entfernen. Dementsprechend gleitet das Gleitlager 22 bzw. die beiden Wangenelemente 34 über die Oberfläche 50 des Elements 16 hinweg und übt so die Funktion des Gleitlagers 22 aus. Darüber hinaus verändert sich aber nicht nur die Relativlage der Flächen 35 und 38, sondern vielmehr bzw. auch andere Flächen entfernen sich voneinander. Hierzu gehört beispielsweise die Fläche 40, die hier insbesondere eine sogenannte Schnittfläche ist. Auch diese Fläche 40 entsteht insbesondere beim Stanzteil als Schnittfläche. Je nach Fertigungsverfahren für eine Kontur des Elements 16 ist diese Fläche 40 bzw. kann unterschiedlich bezeichnet werden. Im Falle des Ausstanzens des Elements 16 kann diese Fläche 40 als Schnittfläche bezeichnet werden. Auch im Falle eines Ausschneidens der Kontur des Elements 16 durch ein Laserschneideverfahren oder ein anderes geeignetes Verfahren (insb. Trennverfahren) kann diese Fläche als Schnittfläche bezeichnet werden. Wie aus der Figur 12 entnommen werden kann, entsteht mit dem Umspritzen bzw. teilweise Umspritzen des Elements 16 direkt angrenzend an die Fläche 40 eine Gegenfläche 70, die durch die Abbildung bzw. Anformung an die Fläche 40 entsteht. Wie diesem Ausführungsbeispiel in den Figuren 13 und 14 entnommen werden kann, entsteht durch das Abkühlen des Halteelements 13 nicht nur eine veränderte Form in Richtung entlang der Oberfläche der Fläche 40 parallel zu einer Kante 43, sondern auch senkrecht zu der Fläche 40. Diese veränderte Form ergibt sich gemäß den Figuren 13 und 14 und führt dazu, dass sich der Abstand s2 herausbildet. Durch diesen Abstand s2 zwischen den beiden Flächen Fläche 40 bzw. Gegenfläche 70 entsteht ein Spalt 73.

Die Loslager bzw. Gleitlager 22 beschreiben eine Klemmung des Elements 16 (Metalleinlegers). Hier kann das Element 16 abgleiten. Die Abgleitung erfolgt radial in Richtung Festlager (Pfeil Rs).

Die Loslager 22 sind so positioniert, dass ein Abgleiten des Haltelements 13 senkrecht zur Stirnfläche des Elements 16 möglich ist. Vor dem Abkühlen, direkt nach dem Öffnen des Spritzgusswerkzeugs ist die Schwindung des Kunststoffs noch nicht wirksam, Figur 11 und Figur 12. Während des Abkühlvorgangs findet die Schwindung in Richtung Festlager 19 statt. Dabei teilt sich die resultierende Schwindung in zwei Vektoren auf, Figur 13. Durch die spezielle Anordnung des Loslagers 22 ist ein Abgleiten des Elements 16 sowohl in die eine Vektorrichtung als auch in die andere Vektorrichtung möglich.

Dadurch kommt es zu keiner Verspannung zwischen Element 16 und dem umspritzten Kunststoff, Haltelement 13. Beim Abgleiten des Elements 16 senkrecht zur Stirnfläche bildet sich ein Spalt 73, Figuren 13 und 14. Eine Loslager-Einspannlänge ist so bemessen, dass trotz Spaltbildung eine sichere Anbindung des Elements 16 gewährleistet ist und eine ausreichende Rest-Überlappung c zwischen dem Kunststoff des Haltelement 13 und dem Element 16 in allen Temperaturbereichen gegeben ist.

Wie anhand des zweiten Ausführungsbeispiels erkannt werden kann, ist dort eine elektrische Vorrichtung 10 mit einem Halteelement 13 offenbart, wobei durch das Halteelement 13 ein Element 16 gehalten ist. Das gehaltene Element 16 ist als elektrischer Leiter ausgeführt. Das gehaltene Element 16 ist an mindestens einer Stelle mittels eines Festlagers 19 durch das Halteelement 13 gehalten. Auch hier haben das Halteelement und das Element 16 jeweils unterschiedliche thermische Längenausdehnungskoeffizienten apha_13, alpha_16. Das Halteelement 13 hält das Element 16 an mindestens einer Stelle mittels eines Gleitlagers 22. Des Weiteren ist auch hier vorgesehen, dass das Halteelement 13 ein Gehäuseteil ist, welches insbesondere ein Gehäuseteil aus einem Gussmaterial ist. Hierzu wird auch hier bevorzugt ein polymerer Kunststoff verwendet, der bevorzugt verstärkt ist (Glasfasern, sonstige Fasern, Verstärkungsstoffe). Bei mindestens einem bzw. mehreren Gleitlagern ist vorgesehen, dass das gehaltene Element 16 insbesondere durch einstückige Ausführungen des Halteelements 16 umgriffen ist.

Wie anhand der Darstellungen nach Figur 11 bis Figur 14 erkannt werden kann, ist vorgesehen, dass eine Fläche 40 des gehaltenen Elements 16, insbesondere eine Schnittfläche, an mindestens einer Kante 43 einer Wange 46 des Gleitlagers benachbart ist. Darüber hinaus wird hier ganz besonders deutlich, dass hier zwei Kanten 43 vorhanden sind, die jeweils einer Wange 46 des Gleitlagers 22 benachbart sind. Durch das Abkühlen der Vorrichtung nach dem Herstellungsprozess des Verbunds aus Halteelement 13 und Element 16 ergibt sich, dass die Fläche 40 des gehaltenen Elements 16 einer Fläche 70 (Gegenfläche) des Halteelements 16 mit einem Abstand s2 gegenübersteht. Je nach Lage des Gleitlagers 22 ergibt sich, dass die Fläche 40 des gehaltenen Elements 16 der Fläche 70 des Halteelements 13 mit einem Abstand s1 versetzt gegenübersteht. Hierzu sei erwähnt, dass die beiden Abstände s1 und s2 zueinander rechtwinklig angeordnet sind. Es ergibt sich daher eine Gesamtverschiebung durch Schwindung, welche durch die beiden Abstände sl, s2 und deren Vektorsumme gebildet ist. Anhand der Darstellung nach Figur 6 kann beispielsweise erkannt werden, dass verschiedene Gleitlager 22 eine ähnliche Ausrichtung aufweisen. Hierzu seien beispielsweise die beiden Gleitlager 22 erwähnt, die auf der rechten Seite des Elements 16 jeweils ober- bzw. unterhalb eines Einlegeteils 53 angeordnet sind (auf den Positionen von ca. 2 Uhr und ca. 4 Uhr). Diese beiden Gleitlager 22 sind zueinander gleichseitig ausgerichtet. Hierunter soll verstanden werden, dass diese beiden Gleitlager 22, das Element 16 von jeweils einer Seite ergreifen, die insgesamt betrachtet, sich einander gleichen. Prinzipiell betrifft dies auch das Gleitlager 22, welches oberhalb des zweiten großen Loches 25 angeordnet ist (rechts von den beiden obersten angeordneten Einlegeteilen 53). Bei diesen erwähnten zwei bzw. drei Gleitlagern 22 sind die jeweiligen Flächen 40 bzw. Schnittflächen praktisch gleich ausgerichtet. Vorzugsweise ist bei diesem Ausführungsbeispiel eines Gleitlagers 22 vorgesehen, dass an diesem Gleitlager die Fläche 40 vorgesehen ist, deren hier als projektive Verlängerung bezeichnete gedankliche Verlängerung einen zylindrischen Stutzen 80 des Halteelements 13 schneidet. Dieser Stutzen 80 dient als Auflagepunkt für eine hier nicht dargestellte Abdeckkappe.

## Patentansprüche

1. Elektrische Vorrichtung (10) mit einem Halteelement (13) und einem durch das Halteelement (13) gehaltenen Element (16), ausgeführt als elektrischer Leiter, wobei das gehaltene Element (16) an mindestens einer Stelle mittels eines Festlagers (19) durch das Halteelement (13) gehalten ist, wobei das Halteelement (13) und das Element (16) unterschiedliche thermische Längenausdehnungskoeffizienten (alpha_13, alpha_16) aufweisen, **dadurch gekennzeichnet, dass** das Halteelement (13) das Element (16) an mindestens einer Stelle mittels eines Gleitlagers (22) hält.

2. Elektrische Vorrichtung nach dem vorstehenden Anspruch, **dadurch gekennzeichnet, dass** das Halteelement (13) ein Gehäuseteil, insbesondere ein Gehäuseteil aus einem Gussmaterial ist.

3. Elektrische Vorrichtung nach einem der vorstehenden Ansprüche, **dadurch gekennzeichnet, dass** das Gleitlager (22) das gehaltene Element (16) - insbesondere einstückig - umgreift.

4. Elektrische Vorrichtung nach einem der vorstehenden Ansprüche, **dadurch gekennzeichnet, dass** eine Fläche (40) des gehaltenen Elements (16), insbesondere eine Schnittfläche, an mindestens einer Kante (43) einer Wange (46) des Gleitlagers (22) benachbart ist.

5. Elektrische Vorrichtung nach einem der vorstehenden Ansprüche, **dadurch gekennzeichnet, dass** die Fläche (40) des gehaltenen Elements (16), insbesondere die Schnittfläche, einer Fläche (70) des Halteelements (13) mit einem Abstand (s2) gegenübersteht.

6. Elektrische Vorrichtung nach dem vorstehenden Anspruch, **dadurch gekennzeichnet, dass** die Fläche (40) des gehaltenen Elements (16), insbesondere die Schnittfläche, der Fläche (70) des Halteelements (13) mit einem Abstand (sl) versetzt gegenübersteht.

7. Elektrische Vorrichtung nach einem der vorstehenden Ansprüche, **dadurch gekennzeichnet, dass** das gehaltene Element (16) an dem Gleitlager (22) eine Fläche (40) aufweist, deren Oberfläche in eine Richtung zu einem Festlager (19) ausgerichtet ist.

8. Elektrische Vorrichtung nach einem der vorstehenden Ansprüche, **dadurch gekennzeichnet, dass** mehrere Gleitlager (22) zueinander gleichseitig ausgerichtet sind.

9. Elektrische Vorrichtung nach einem der vorstehenden Ansprüche, **dadurch gekennzeichnet, dass** an dem Gleitlager (22) eine Fläche (40) ist, deren projektive Verlängerung einen zylindrischen Stutzen (80) des Halteelements (13) schneidet.
